(19) Europäisches Patentamt
European Patent Office
Office européen des brevets

(11) EP 3 798 871 A1

(12) EUROPEAN PATENT APPLICATION
published in accordance with Art. 153(4) EPC

(43) Date of publication:
31.03.2021 Bulletin 2021/13

(51) Int Cl.:
G06F 17/50 (2006.01)

(21) Application number: 19807012.0

(86) International application number:
PCT/CN2019/074671

(22) Date of filing: 03.02.2019

(87) International publication number:
WO 2019/223368 (28.11.2019 Gazette 2019/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.05.2018 CN 201810493528

(71) Applicant: SHENZHEN POWER SUPPLY BUREAU
CO., LTD.
Guangdong 518000 (CN)

(72) Inventors:
• LIAO, Jianping
  Cambridge CB1 1AH (GB)
• HU, Ziheng
  Cambridge CB1 1AH (GB)
• ZHANG, Bin
  Cambridge CB1 1AH (GB)
• WANG, Zhenzi
  Cambridge CB1 1AH (GB)
• WANG, Wei
  Cambridge CB1 1AH (GB)

(74) Representative: Horak, Michael
horak. Rechtsanwälte Partnerschaft
Georgstrasse 48
30159 Hannover (DE)

(54) SIMULATION MODEL ESTABLISHMENT METHOD FOR HIGH-TEMPERATURE SUPERCONDUCTING CORC

(57) The invention discloses a high-temperature superconducting CORC simulation modeling method, which includes the following steps: step 1, according to the actual three-dimensional structure of superconducting CORC, ignoring the thickness of the superconducting tape, establishing and solving a superconducting CORC three-dimensional electromagnetic simulation model; step 2, according to the cross-sectional structure of superconducting CORC, establishing a superconducting CORC two-dimensional electromagnetic simulation model; step 3, extracting the distribution of the current density vector along the width of the superconducting tape from the three-dimensional electromagnetic simulation model, and using it as the excitation of the two-dimensional electromagnetic simulation model to solve the distribution of the current density vector along the thickness of the superconducting tape to obtain the effect of superconducting CORC three-dimensional structure on its electromagnetic characteristics. The implementation of the invention has the advantages of accurate data obtained by calculation and small calculation amount.

Fig. 1

**Description**

**BACKGROUND OF THE INVENTION**

**1. RELATED ARTS**

The present application claims the priority of a Chinese patent application filed with the Chinese Patent Office on May 22, 2018, the application number is 201810493528.5, and the invention title is 'A SIMULATION MODELING METHOD FOR HIGH-TEMPERATURE SUPERCONDUCTING CONDUCTOR ON ROUND CORE'. The entire content of the above-mentioned patent is by reference incorporated in the present application.

**2. FIELD OF THE INVENTION**

Embodiments of the present disclosure relate to high-temperature superconducting (HTS) cables, and more particularly to a simulation modeling method for HTS conductor on round core (CORC).

**3. DISCUSSION OF THE RELATED ART**

With the rapid development of China's economy, electricity consumption in many cities has increased year by year. The power load in the central area of the city has increased sharply, and the transmission and distribution capacity has increased significantly, issues such as reducing grid losses and improving grid operation stability have also been raised. At present, the power grid system has a large loss in the transmission and distribution links, so all countries are looking for solutions to reduce power grid losses. Superconducting materials are one of the most important solutions to reduce power grid losses. Superconducting materials have the advantages of low loss, high efficiency, and high transmission current density, which are of great significance for the future development of the power industry. In recent years, with the development of HTS material technology, the electromagnetic and mechanical properties of HTS materials have been greatly improved, enabling HTS materials to achieve large-scale commercial production. The commercial production of superconducting tapes has promoted the extensive research and application of superconducting devices all over the world. Among them, superconducting cables have received widespread attention because of their strong flow capacity, compact structure, and no electromagnetic radiation pollution. At present, there are already many superconducting cables running in the world.

Conductor on round core (CORC) is the basic form of superconducting cables. The electromagnetic characteristics of CORC directly determine the flow capacity of superconducting cables. During the CORC winding process, winding radius, winding angle, gap width and flow size of different tapes will affect the electromagnetic characteristics of CORC. The accumulation of electromagnetic heat loss of CORC will cause the temperature of the power cable to rise. Once the temperature of the power cable exceeds the critical temperature of the superconducting materials, it will cause the quench failure of the cable, and the power cable will be burned in severe cases. The current traditional superconducting CORC finite element simulation modeling method including simplifying the three-dimensional structure of the conductor to varying degrees through two-dimensional model and three-dimensional model. The traditional two-dimensional model cannot reflect the three-dimensional spiral structure of CORC, and cannot optimize the three-dimensional structure of CORC. Some three-dimensional models ignore the influence of the gap between the tapes and cannot accurately assess the AC loss of CORC. Although some three-dimensional models consider the influence of the gap, because the width of the superconducting tape is tens or even hundreds of times the thickness, the geometric modeling is complicated and the calculation amount is extremely huge. The above-mentioned simulation modeling methods are difficult to systematically evaluate the effects of several structural parameters of CORC on its electromagnetic characteristics. Therefore, it is necessary to find a simulation modeling method that can accurately evaluate the electromagnetic characteristics of CORC, so as to provide a reference for the design of the superconducting cable body, and to ensure the safety and stability of the superconducting cable in long-term operation under various working conditions.

**SUMMARY**

The object to be achieved by the present invention is to provide a simulation modeling method for HTS CORC, to analyze the effect of the three-dimensional structural parameters of the superconducting CORC, including the winding radius, winding angle, and gap width on the electromagnetic characteristics of the conductor, and to evaluate the loss characteristics of superconducting CORC with different three-dimensional structures to offer a correction reference for the design of traditional superconducting cables, so that the data is accurate and the amount of calculation is small.

To achieve above-mentioned object of the claimed invention, a simulation modeling method for high-temperature superconducting conductor on round core is disclosed which includes:

step 1, according to the actual three-dimensional structure of superconducting CORC, ignoring the thickness of the superconducting tape, establishing and solving a superconducting CORC three-dimensional electromagnetic simulation model;

step 2, according to the cross-sectional structure of superconducting CORC, establishing a superconducting CORC two-dimensional electromagnetic simulation model;

step 3, extracting the distribution of the current density vector along the width of the superconducting tape from the three-dimensional electromagnetic simulation model, and using it as the excitation of the two-dimensional electromagnetic simulation model to solve the distribution of the current density vector along the thickness of the superconducting tape to obtain the effect of superconducting CORC three-dimensional structure on its electromagnetic characteristics.

Advantageously, said step 1 further includes:

step 11, determining the structural parameters of the superconducting CORC and the material parameters of each component, the structural parameters including tape width, winding radius, tape winding angle, and gap width between tapes, the material parameters including magnetic permeability and electrical conductivity;
step 12, based on the partial differential equations (PDE) and magnetic field (mf) physical field modules in COMSOL Multiphysics, ignoring the thickness of the superconducting tapes, establishing the CORC 3D multiphysics electromagnetic simulation model, the model including the superconducting domain and the non-superconducting domain;
step 13, setting the solution domain of the magnetic field (mf) physical field to all domains including the superconducting domain and the non-superconducting domain, setting the corresponding control equation as shown in the following equation (1), setting the solution domain of the partial differential equation (PDE) physical field to the superconducting domain, and the corresponding control equation being shown in the following equation (2):

$$\begin{cases} \nabla \times \vec{H} = \vec{J} \\ \vec{B} = \nabla \times \vec{A} \\ \vec{J} = \gamma \vec{E} \\ \vec{E} = -\dfrac{\partial \vec{A}}{\partial t} \end{cases} \qquad (1)$$

$$\left(\nabla \times \vec{E}\right) \cdot \vec{n} + \frac{\partial \vec{B}}{\partial t} \cdot \vec{n} = 0, \vec{E} = E_0 \left(\frac{|\vec{J}|}{J_c}\right)^n \frac{\vec{J}}{J_c}, \vec{J} = \nabla \times \vec{T} \qquad (2)$$

wherein $\vec{H}$ is the magnetic field strength vector, $\vec{J}$ is the current density vector, $A$ is the vector magnetic potential, $\vec{E}$ is the electric field strength vector, $\vec{T}$ is the current vector potential, $\vec{n}$ is the unit normal vector of the tape surface, $t$ is the time, $\gamma$ is the electrical conductivity, $\vec{B}$ is the magnetic induction intensity vector;
step 14, invoking the magnetic induction intensity variable in the magnetic field (mf) physical field from the excitation of the partial differential equation (PDE) physical field, that is, $\vec{B}$ in the equation (2) is invoked from the magnetic field (mf) physical field module; invoking the current density vector defined in the partial differential equation (PDE) physical field from the excitation of the magnetic field (mf) physical field, that is, $\vec{J}$ in the equation (1) is invoked from the partial differential equation (PDE) physical field module; so as to realize the coupling between the physical field of partial differential equation (PDE) and the physical field of magnetic field (mf), and then obtain the current distribution along the width of the tape.

Advantageously, said step 2 further includes:

step 21, determining the cross-sectional structure according to the three-dimensional structure parameters of the superconducting CORC, and the corresponding material parameters of each part in the two-dimensional simulation model;
step 22, establishing a two-dimensional superconducting CORC simulation model, and the corresponding control equation being shown in the following equation (3):

$$\nabla \times \rho \nabla \times \vec{H} = -\mu \frac{\partial \vec{H}}{\partial t} \quad \cdot \vec{J} = \nabla \times \vec{H}, \rho = \rho(J) \qquad (3)$$

wherein $\rho$ is the resistivity;

step 23, using the current distribution along the tape width direction obtained from the three-dimensional simulation model as an excitation, and applying it to the two-dimensional simulation model.

Advantageously, said step 3 further includes:

obtaining the distribution of current density and magnetic field strength in the entire two-dimensional solution domain through the calculation process of the three-dimensional simulation model and the two-dimensional simulation model, and then obtaining the current density distribution, and obtaining the loss characteristics and flow capacity of CORC according to the current density distribution.

Advantageously, said step 1 further includes:

applying current excitation of arbitrary waveform to all tapes with a total number of n in the three-dimensional electromagnetic simulation model, cutting any of the superconducting tapes with equal width into a predetermined number of sub-bands along the width direction, and obtaining the time-varying current value on each sub-band.

Advantageously, said step 3 further includes:

applying the time-varying current value of each sub-band corresponding to each superconducting tape as an excitation to the respective sub-bands of (n-1) superconducting tapes in the two-dimensional simulation model, imposing a total current constraint on the entire tape section of the superconducting tape except for the above (n-1) tapes, and solving the two-dimensional simulation model to obtain the current density distribution of the entire tape section.

Performing the embodiments according to the present invention will bring out the following beneficial effects:
The present invention provides a simulation modeling method for HTS CORC so as to analyze the effect of the three-dimensional structural parameters of the superconducting CORC, including the winding radius, winding angle, and gap width on the electromagnetic characteristics of the conductor, and to evaluate the loss characteristics of superconducting CORC with different three-dimensional structures;

The three-dimensional simulation model established by the present invention ignores the thickness of the tape, which reduces the difficulty of three-dimensional simulation modeling, and reduces the amount of calculation for solving the 3D simulation model, the efficiency of the solution is thus greatly improved;

The modeling method provided by the present invention can solve three-dimensionally the current distribution in the superconducting tape by combining three-dimensional simulation modeling and two-dimensional simulation modeling, and compared with traditional two-dimensional and three-dimensional simulation analysis methods, it can calculate the AC loss of CORC more accurately;

The three-dimensional simulation model provided by the present invention can reflect the winding radius, pitch and tape gap of the CORC, which can provide a reference for the design of the superconducting cable conductor.

## BRIEF DESCRIPTION OF THE DRAWINGS

In order to explain the technical solutions in the embodiments of the present invention or in the prior art more clearly, the following will briefly introduce the drawings that need to be used in the description of the embodiments or the prior art. Obviously, the drawings in the following description are only some embodiments of the present invention. For those of ordinary skill in the art, without creative labor, obtaining other drawings based on these drawings still belongs to the scope of the present invention.

Fig. 1 is a main flow diagram of an embodiment of a simulation modeling method for HTS CORC according to the present invention.

Fig. 2 is a schematic diagram of the three-dimensional structure of CORC involved in an embodiment of Fig. 1.

Fig. 3 is a schematic diagram of the two-dimensional structure of CORC involved in an embodiment of Fig. 1.

Fig. 4 is a schematic diagram of dividing each sub-band of the superconducting tape in Fig. 2.

Fig. 5a is a schematic diagram of the time-varying current distribution of each sub-band 1 obtained by solving when the amplitude of the sinusoidal alternating current Im=0.2Ic applied to the three-dimensional simulation model of Fig. 2.

Fig. 5b is a schematic diagram of the time-varying current distribution of each sub-band 1 obtained by solving when the amplitude of the sinusoidal alternating current Im=0.6Ic applied to the three-dimensional simulation model of Fig. 2.

Fig. 5c is a schematic diagram of the time-varying current distribution of each sub-band 1 obtained by solving when the amplitude of the sinusoidal alternating current Im=Ic applied to the three-dimensional simulation model of Fig. 2.

Fig. 5d is a schematic diagram of the time-varying current distribution of each sub-band 3 obtained by solving when the amplitude of the sinusoidal alternating current Im=0.2Ic applied to the three-dimensional simulation model of Fig. 2.

Fig. 5e is a schematic diagram of the time-varying current distribution of each sub-band 3 obtained by solving when the amplitude of the sinusoidal alternating current Im=0.6Ic applied to the three-dimensional simulation model of Fig. 2.

Fig. 5f is a schematic diagram of the time-varying current distribution of each sub-band 3 obtained by solving when the amplitude of the sinusoidal alternating current Im=Ic applied to the three-dimensional simulation model of Fig. 2.

Fig. 5g is a schematic diagram of the time-varying current distribution of each sub-band 5 obtained by solving when the amplitude of the sinusoidal alternating current Im=0.2Ic applied to the three-dimensional simulation model of Fig. 2.

Fig. 5h is a schematic diagram of the time-varying current distribution of each sub-band 5 obtained by solving when the amplitude of the sinusoidal alternating current Im=0.6Ic applied to the three-dimensional simulation model of Fig. 2.

Fig. 5i is a schematic diagram of the time-varying current distribution of each sub-band 5 obtained by solving when the amplitude of the sinusoidal alternating current Im=Ic applied to the three-dimensional simulation model of Fig. 2.

Fig. 6a is a schematic diagram of the instantaneous AC loss of the superconducting tape corresponding to each gap when the sinusoidal alternating current amplitude Im=0.2Ic is applied to the three-dimensional simulation model of Fig. 2.

Fig. 6b is a schematic diagram of the instantaneous AC loss of the superconducting tape corresponding to each gap when the sinusoidal alternating current amplitude Im=0.6Ic is applied to the three-dimensional simulation model of Fig. 2.

Fig. 6c is a schematic diagram of the instantaneous AC loss of the superconducting tape corresponding to each gap when the sinusoidal alternating current amplitude Im=Ic is applied to the three-dimensional simulation model of Fig. 2.

Fig. 7a is a schematic diagram of the AC loss of each sub-band of the superconducting tape obtained by solving when the amplitude of the sinusoidal alternating current Im=0.2Ic applied to the three-dimensional simulation model of Fig. 2.

Fig. 7b is a schematic diagram of the AC loss of each sub-band of the superconducting tape obtained by solving when the amplitude of the sinusoidal alternating current Im=0.6Ic applied to the three-dimensional simulation model of Fig. 2.

Fig. 7c is a schematic diagram of the AC loss of each sub-band of the superconducting tape obtained by solving when the amplitude of the sinusoidal alternating current Im=Ic applied to the three-dimensional simulation model of Fig. 2.

## DETAILED DESCRIPTION OF THE EMBODIMENTS

The technical solutions in the embodiments of the present invention are clearly and completely described in the following with reference to the drawings in the embodiments of the present invention. It is obvious that the described embodiments are only a part of the embodiments of the present invention, and not all of the embodiments. All other embodiments obtained by those skilled in the art based on the embodiments of the present invention without creative efforts are within the scope of the present invention.

Here, it should also be noted that, in order to avoid obscuring the present invention due to unnecessary details, only the structure and/or processing steps closely related to the solution according to the present invention are shown in the drawings, and the other details not relevant to the present invention are omitted.

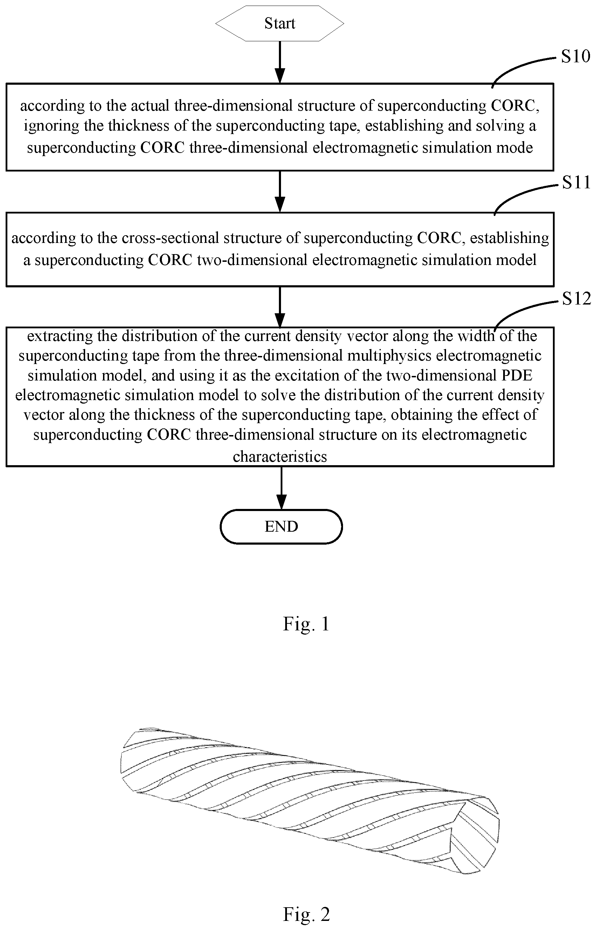

Referring to Figure 1, it shows a main flow diagram of an embodiment of a simulation modeling method for HTS CORC according to the present invention, which includes:

Step S10, according to the actual three-dimensional structure of superconducting CORC, ignoring the thickness of the superconducting tape, establishing and solving a superconducting CORC three-dimensional electromagnetic simulation model;

Step S11, according to the cross-sectional structure of superconducting CORC, establishing a superconducting CORC two-dimensional electromagnetic simulation model;

Step S12, extracting the distribution of the current density vector along the width of the superconducting tape from the three-dimensional multiphysics electromagnetic simulation model, and using it as the excitation of the two-dimensional PDE electromagnetic simulation model to solve the distribution of the current density vector along the thickness of the superconducting tape, obtaining the effect of superconducting CORC three-dimensional structure on its electromagnetic characteristics.

More specifically, in an embodiment, the step S10 further includes:

Step 11, determining the structural parameters of the superconducting CORC and the material parameters of each component, the structural parameters including tape width, winding radius, tape winding angle, and gap width between tapes, the material parameters including magnetic permeability and electrical conductivity;
Step 12, based on the partial differential equations (PDE) and magnetic field (mf) physical field modules in COMSOL Multiphysics, ignoring the thickness of the superconducting tapes, establishing the CORC 3D multiphysics electromagnetic simulation model, the model including the superconducting domain and the non-superconducting domain;
Step 13, setting the solution domain of the magnetic field (mf) physical field to all domains including the superconducting domain and the non-superconducting domain, setting the corresponding control equation as shown in the following equation (1), setting the solution domain of the partial differential equation (PDE) physical field to the superconducting domain, and the corresponding control equation being shown in the following equation (2):

$$\begin{cases} \nabla \times \vec{H} = \vec{J} \\ \vec{B} = \nabla \times \vec{A} \\ \vec{J} = \gamma \vec{E} \\ \vec{E} = -\dfrac{\partial \vec{A}}{\partial t} \end{cases} \tag{1}$$

$$\left(\nabla \times \vec{E}\right) \cdot \vec{n} + \frac{\partial \vec{B}}{\partial t} \cdot \vec{n} = 0, \vec{E} = E_0 \left(\frac{|\vec{J}|}{J_c}\right)^n \frac{\vec{J}}{J_c}, \vec{J} = \nabla \times \vec{T} \tag{2}$$

wherein $\vec{H}$ is the magnetic field strength vector and the unit is A/m; $\vec{J}$ is the current density vector and the unit is A/m2; $A$ is the vector magnetic potential and the unit is Wb/m; $\vec{E}$ is the electric field strength vector and the unit V/m; $T$ is the current vector potential and the unit is A/m2 ; $\vec{n}$ is the unit normal vector of the tape surface; $t$ is the time and the unit is second; $\gamma$ is the electrical conductivity and the unit is S/m; $\vec{B}$ is the magnetic induction intensity vector and the unit is T;

Step 14, invoking the magnetic induction intensity variable in the magnetic field (mf) physical field from the excitation of the partial differential equation (PDE) physical field, that is, $\vec{B}$ in the equation (2) is invoked from the magnetic field (mf) physical field module; invoking the current density vector defined in the partial differential equation (PDE) physical field from the excitation of the magnetic field (mf) physical field, that is, $\vec{J}$ in the equation (1) is invoked from the partial differential equation (PDE) physical field module; so as to realize the coupling between the physical field of partial differential equation (PDE) and the physical field of magnetic field (mf), and then obtain the current distribution along the width of the tape.

In an embodiment, the method according to the present invention further includes:

Applying a sinusoidal alternating current to each tape in the three-dimensional simulation model, cutting at least part of the superconducting tapes with equal width into a predetermined number of sub-bands along the width direction, and obtaining the time-varying current value on each sub-band.

Preferably, the step S11 further includes:

Step 21, determining the cross-sectional structure according to the three-dimensional structure parameters of the superconducting CORC, and the corresponding material parameters of each part in the two-dimensional simulation model;

Step 22, establishing a two-dimensional superconducting CORC simulation model, and the corresponding control equation being shown in the following equation (3):

$$\nabla \times \rho \nabla \times \vec{H} = -\mu \frac{\partial \vec{H}}{\partial t} \cdot \vec{J} = \nabla \times \vec{H}, \rho = \rho(J) \qquad (3)$$

wherein $\rho$ is the resistivity and the unit is $\Omega \cdot m$;

Step 23, using the current distribution along the tape width direction obtained from the 3D simulation model as an excitation, and applying it to the 2D simulation model.

Preferably, the step S12 further includes:

Obtaining the distribution of current density and magnetic field strength in the entire two-dimensional solution domain through the calculation process of the three-dimensional simulation model and the two-dimensional simulation model, and then obtaining the current density distribution, and obtaining the loss characteristics and flow capacity of CORC according to the current density distribution.

In an embodiment, the step S12 specifically includes: applying the time-varying current value of each sub-band corresponding to each superconducting tape as an excitation to the respective sub-bands of (n-1) superconducting tapes in the two-dimensional simulation model, imposing a total current constraint on the entire tape section of the superconducting tape except for the above (n-1) tapes, and solving the two-dimensional simulation model to obtain the current density distribution of the entire tape section. So that the loss characteristics and flow capacity of the three-dimensional structure can be obtained after data processing.

In order to better understand the present invention, the following uses a specific embodiment to illustrate the HTS CORC simulation modeling method provided by the present invention.

In this embodiment, the superconducting CORC is wound with four superconducting tapes, which are numbered 1, 2, 3, and 4. And analyze the electromagnetic characteristics under the excitation of sinusoidal alternating current as an example to illustrate a simulation modeling method for the electromagnetic characteristics of the HTS CORC. In this embodiment, the mf and PDE modules are implemented by COMSOL Multiphysics simulation software. The specific implementation steps are as follows:

1) Building and solving the 3D electromagnetic simulation model in COMSOL Multiphysics. Establish a PDE-mf model of CORC, where the three-dimensional structure of CORC is shown in Fig. 2. In this embodiment, the superconducting conductor is wound with Superpower4050 tapes. The tape width is 4mm, the tape winding angle is 26.28°, the gap width g between the four tapes is respectively 1mm, 2mm, 4mm.

2) Applying superconducting CORC excitation and cutting the sub-bands. Apply sinusoidal alternating current to each tape in the three-dimensional model, with amplitude Im=0.2Ic, 0.6Ic, Ic, wherein the critical current Ic of the superconducting tape is 120A, and the frequency is 50Hz. Cut the superconducting tapes 1, 2, and 3 into 10 sub-bands with equal width in the width direction, and perform finite element calculation according to the control equation in the step S10 to obtain the time-varying current value on each sub-band.

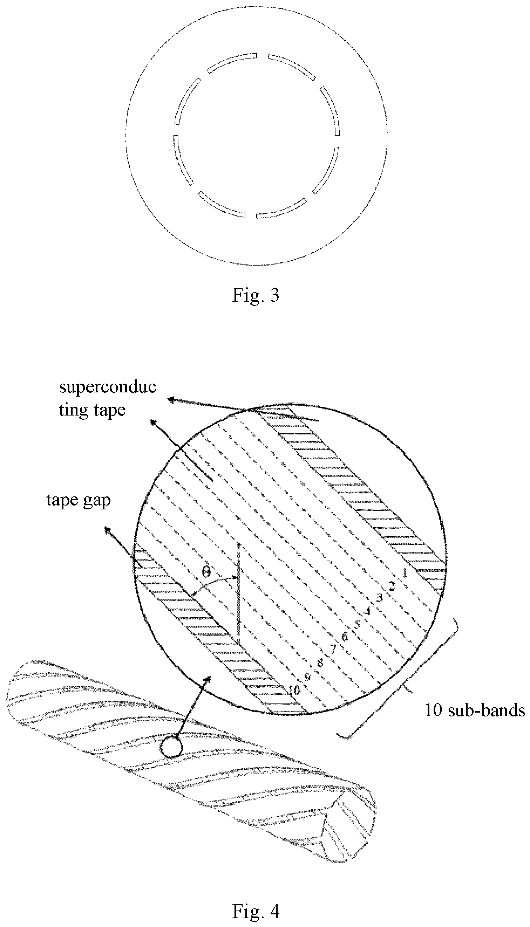

3) Building and solving the two-dimensional electromagnetic simulation model in COMSOL Multiphysics. Establish the PDE two-dimensional electromagnetic simulation model of CORC. Fig. 3 shows a schematic diagram of the two-dimensional structure of CORC.

4) Performing coupled solution of the three-dimensional electromagnetic simulation model and the two-dimensional electromagnetic simulation model. According to the solution of the three-dimensional electromagnetic simulation model, the time-varying current values of the respective 10 sub-bands of the superconducting tapes 1, 2, and 3 are applied correspondingly as excitations to the respective 10 sub-bands of the superconducting tapes 1, 2, and 3 in the two-dimensional simulation model. Fig. 4 shows a schematic diagram of the sub-band division of the superconducting tapes. Superconducting tape 4 as the research object imposes total current constraints on the entire tape section, and then solve the two-dimensional simulation model.

In this embodiment, the simulation duration is a power frequency period of 0.02s, and the results are as follows:

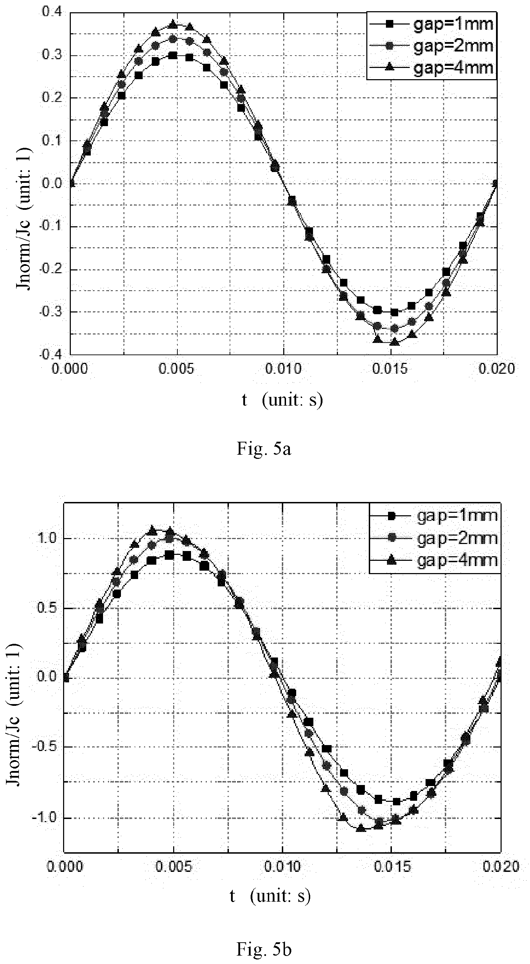

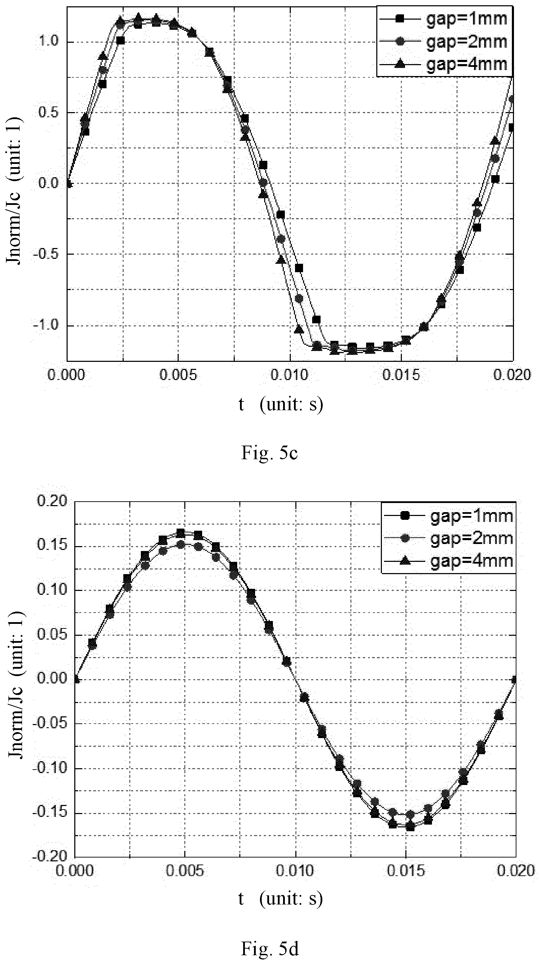

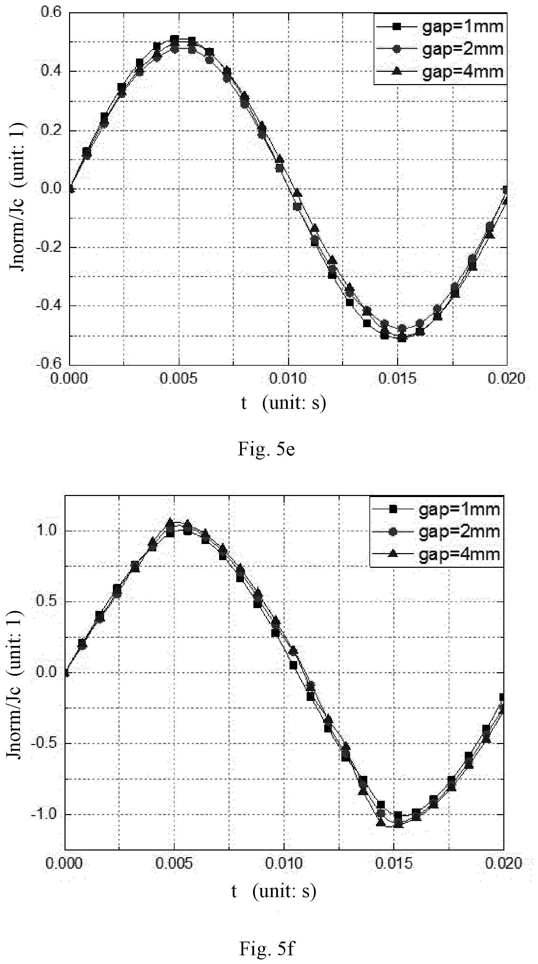

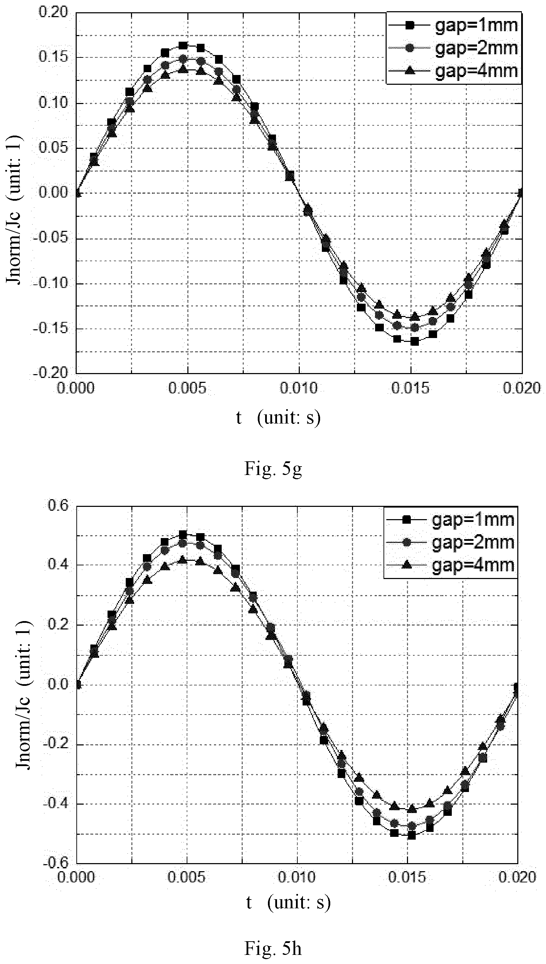

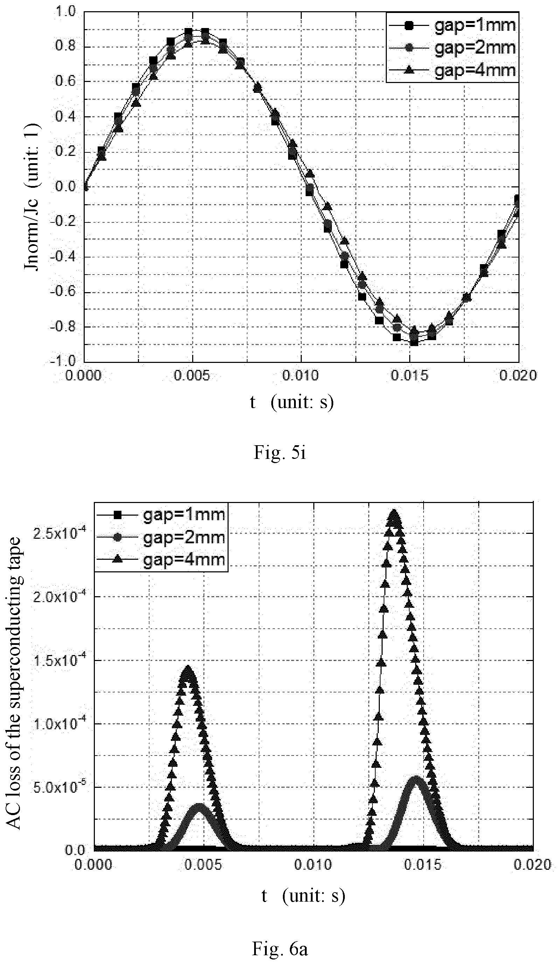

1) As shown in Figs. 5a-5i, when the current amplitude is low, the time-varying current waveform of the sub-band is still approximate to a sine value according to the solution of the three-dimensional electromagnetic simulation model, and the current of the sub-band at the edge has a larger amplitude. As the current amplitude increases, the current waveform of the sub-band at the edge of the tape will be greatly distorted due to the nonlinear E-J characteristics of the superconducting tape. In addition, when the current of the sub-band of the conductor with a larger gap starts to appear waveform distortion, the corresponding current flow amplitude is smaller.

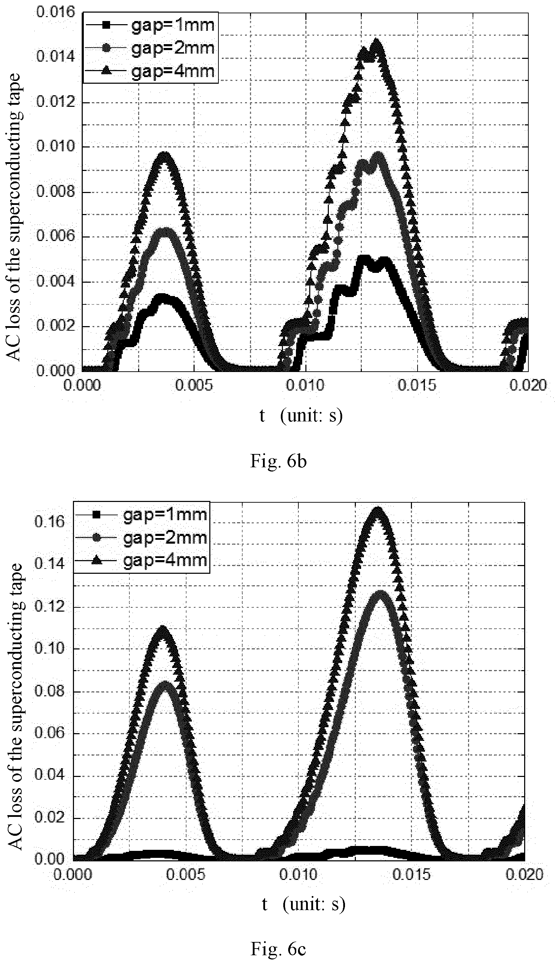

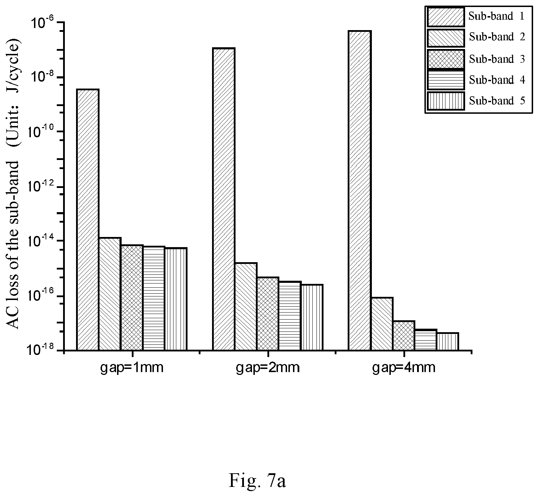

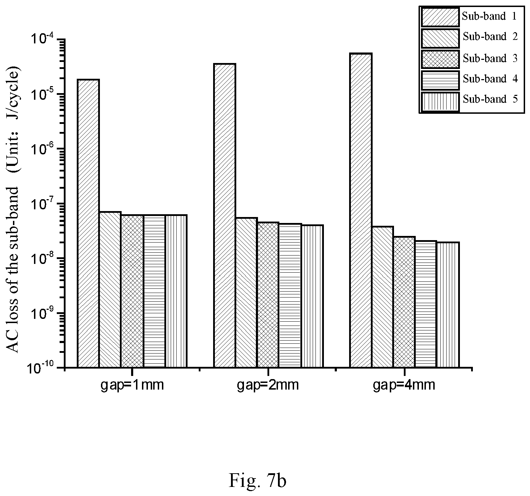

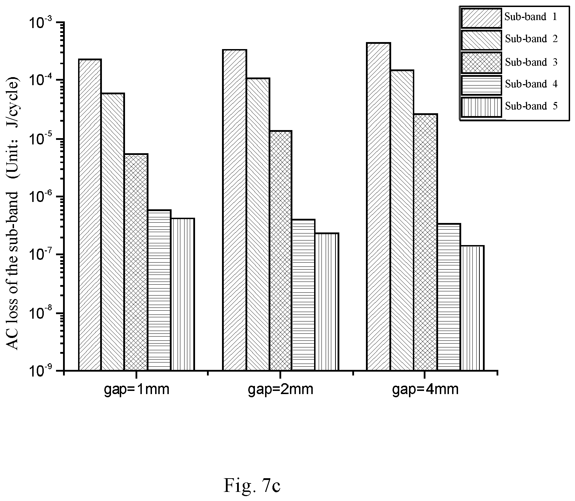

2) In the simulation process, as the current increases and the tape gap width increases, the AC loss of the conductor tends to increase. The instantaneous AC loss of the conductor is shown in Figs. 6a-6c. At the same time, the sub-band at the edge of the tape has greater loss than the sub-band at the middle, as shown in Figs. 7a-7c. In the same way, using the method of controlling variables to implement the above process can explore the influence of winding angle, winding radius, etc. on the electromagnetic characteristics of superconducting CORC, which can provide a reference for the design of traditional superconducting cables.

The above-mentioned embodiment has studied the influence of the gap width on the electromagnetic characteristics of superconducting CORC, including current distribution and loss.

Performing the embodiments according to the present invention will bring out the following beneficial effects: The present invention provides a simulation modeling method for HTS CORC so as to analyze the effect of the three-dimensional structural parameters of the superconducting CORC, including the winding radius, winding angle, and gap width on the electromagnetic characteristics of the conductor, and to evaluate the loss characteristics of superconducting CORC with different three-dimensional structures;

The three-dimensional simulation model established by the present invention ignores the thickness of the tape, which reduces the difficulty of three-dimensional simulation modeling, and reduces the amount of calculation for solving the 3D simulation model, the efficiency of the solution is thus greatly improved;

The modeling method provided by the present invention can solve three-dimensionally the current distribution in the superconducting tape by combining three-dimensional simulation modeling and two-dimensional simulation modeling, and compared with traditional two-dimensional and three-dimensional simulation analysis methods, it can calculate the AC loss of CORC more accurately;

The three-dimensional simulation model provided by the present invention can reflect the winding radius, pitch and tape gap of the CORC, which can provide a reference for the design of the superconducting cable conductor.

It should be noted that in the present invention, relational terms such as first and second are only used to distinguish one entity or operation from another entity or operation, and do not necessarily require or imply one of these entities or operations. There is any such actual relationship or order between. Moreover, the terms "include", "include" or any other variants thereof are intended to cover non-exclusive inclusion, so that a process, method, article or device including a series of elements not only includes those elements, but also includes other elements that are not explicitly listed, or also include elements inherent to this process, method, article or equipment. If there are no more restrictions, the element defined by the sentence "including a..." does not exclude the existence of other same elements in the process, method, article, or equipment that includes the element.

It is believed that the present embodiments and their advantages will be understood from the foregoing description, and it will be apparent that various changes may be made thereto without departing from the spirit and scope of the invention or sacrificing all of its material advantages, the examples hereinbefore described merely being preferred or exemplary embodiments of the invention.

## Claims

1. A simulation modeling method for high-temperature superconducting conductor on round core comprising:

step 1, according to the actual three-dimensional structure of superconducting CORC, ignoring the thickness of the superconducting tape, establishing and solving a superconducting CORC three-dimensional electromagnetic simulation model;

step 2, according to the cross-sectional structure of superconducting CORC, establishing a superconducting CORC two-dimensional electromagnetic simulation model;

step 3, extracting the distribution of the current density vector along the width of the superconducting tape from the three-dimensional electromagnetic simulation model, and using it as the excitation of the two-dimensional electromagnetic simulation model to solve the distribution of the current density vector along the thickness of the superconducting tape to obtain the effect of superconducting CORC three-dimensional structure on its electromagnetic characteristics.

2. The method as claimed in claim 1, wherein said step 1 further includes:

step 11, determining the structural parameters of the superconducting CORC and the material parameters of each component, the structural parameters including tape width, winding radius, tape winding angle, and gap width between tapes, the material parameters including magnetic permeability and electrical conductivity;

step 12, based on the partial differential equations (PDE) and magnetic field (mf) physical field modules in COMSOL Multiphysics, ignoring the thickness of the superconducting tapes, establishing the CORC 3D multiphysics electromagnetic simulation model, the model including the superconducting domain and the non-superconducting domain;

step 13, setting the solution domain of the magnetic field (mf) physical field to all domains including the superconducting domain and the non-superconducting domain, setting the corresponding control equation as shown in the following equation (1), setting the solution domain of the partial differential equation (PDE) physical field to the superconducting domain, and the corresponding control equation being shown in the following equation (2):

$$\begin{cases} \nabla \times \vec{H} = \vec{J} \\ \vec{B} = \nabla \times \vec{A} \\ \vec{J} = \gamma \vec{E} \\ \vec{E} = -\frac{\partial \vec{A}}{\partial t} \end{cases} \qquad (1)$$

$$\left(\nabla \times \vec{E}\right) \cdot \vec{n} + \frac{\partial \vec{B}}{\partial t} \cdot \vec{n} = 0, \vec{E} = E_0 \left(\frac{|\vec{J}|}{J_c}\right)^n \frac{\vec{J}}{J_c}, \vec{J} = \nabla \times \vec{T} \qquad (2)$$

wherein $\vec{H}$ is the magnetic field strength vector, $\vec{J}$ is the current density vector, $\vec{A}$ is the vector magnetic potential, $\vec{E}$ is the electric field strength vector, $\vec{T}$ is the current vector potential, $\vec{n}$ is the unit normal vector of the tape surface, $t$ is the time, $\gamma$ is the electrical conductivity, $\vec{B}$ is the magnetic induction intensity vector;

step 14, invoking the magnetic induction intensity variable in the magnetic field (mf) physical field from the excitation of the partial differential equation (PDE) physical field, that is, $\vec{B}$ in the equation (2) is invoked from the magnetic field (mf) physical field module; invoking the current density vector defined in the partial differential equation (PDE) physical field from the excitation of the magnetic field (mf) physical field, that is, $\vec{J}$ in the equation (1) is invoked from the partial differential equation (PDE) physical field module; so as to realize the coupling between the physical field of partial differential equation (PDE) and the physical field of magnetic field (mf), and then obtain the current distribution along the width of the tape.

3. The method as claimed in claim 2, wherein said step 2 further includes:

step 21, determining the cross-sectional structure according to the three-dimensional structure parameters of the superconducting CORC, and the corresponding material parameters of each part in the two-dimensional simulation model;

step 22, establishing a two-dimensional superconducting CORC simulation model, and the corresponding control equation being shown in the following equation (3):

$$\nabla \times \rho \nabla \times \vec{H} = -\mu \frac{\partial \vec{H}}{\partial t}, \vec{J} = \nabla \times \vec{H}, \rho = \rho(J) \qquad (3)$$

wherein $\rho$ is the resistivity;

step 23, using the current distribution along the tape width direction obtained from the three-dimensional simulation model as an excitation, and applying it to the two-dimensional simulation model.

4. The method as claimed in claim 3, wherein said step 3 further includes:
obtaining the distribution of current density and magnetic field strength in the entire two-dimensional solution domain through the calculation process of the three-dimensional simulation model and the two-dimensional simulation model, and then obtaining the current density distribution, and obtaining the loss characteristics and flow capacity of CORC according to the current density distribution.

5. The method as claimed in claim 2, wherein said step 1 further includes:
applying current excitation of arbitrary waveform to all tapes with a total number of n in the three-dimensional electromagnetic simulation model, cutting any of the superconducting tapes with equal width into a predetermined number of sub-bands along the width direction, and obtaining the time-varying current value on each sub-band.

6. The method as claimed in claim 5, said step 3 further includes:
applying the time-varying current value of each sub-band corresponding to each superconducting tape as an excitation to the respective sub-bands of (n-1) superconducting tapes in the two-dimensional simulation model, imposing a total current constraint on the entire tape section of the superconducting tape except for the above (n-1) tapes, and solving the two-dimensional simulation model to obtain the current density distribution of the entire tape section.

```
          ┌──────────────┐
          <    Start      >
          └──────────────┘
                 │
                 ▼                                           ─ S10
┌────────────────────────────────────────────────────────────┐
│ according to the actual three-dimensional structure of       │
│ superconducting CORC, ignoring the thickness of the          │
│ superconducting tape, establishing and solving a             │
│ superconducting CORC three-dimensional electromagnetic       │
│ simulation mode                                              │
└────────────────────────────────────────────────────────────┘
                 │
                 ▼                                           ─ S11
┌────────────────────────────────────────────────────────────┐
│ according to the cross-sectional structure of superconducting│
│ CORC, establishing a superconducting CORC two-dimensional    │
│ electromagnetic simulation model                             │
└────────────────────────────────────────────────────────────┘
                 │
                 ▼                                           ─ S12
┌────────────────────────────────────────────────────────────┐
│ extracting the distribution of the current density vector    │
│ along the width of the superconducting tape from the         │
│ three-dimensional multiphysics electromagnetic simulation    │
│ model, and using it as the excitation of the two-dimensional │
│ PDE electromagnetic simulation model to solve the            │
│ distribution of the current density vector along the         │
│ thickness of the superconducting tape, obtaining the effect  │
│ of superconducting CORC three-dimensional structure on its   │
│ electromagnetic characteristics                              │
└────────────────────────────────────────────────────────────┘
                 │
                 ▼
          ┌──────────────┐
          (     END       )
          └──────────────┘
```

Fig. 1

Fig. 2

Fig. 3

superconduc
ting tape

tape gap

$\theta$

1
2
3
4
5
6
7
8
9
10

10 sub-bands

Fig. 4

Fig. 5a

Fig. 5b

Fig. 5c

Fig. 5d

Fig. 5e

Fig. 5f

Fig. 5g

Fig. 5h

Fig. 5i

Fig. 6a

Fig. 6b

Fig. 6c

Fig. 7a

Fig. 7b

Fig. 7c

## INTERNATIONAL SEARCH REPORT

| | International application No. |
|---|---|
| | **PCT/CN2019/074671** |

| | |
|---|---|
| **A.    CLASSIFICATION OF SUBJECT MATTER** | |
| G06F 17/50(2006.01)i | |
| According to International Patent Classification (IPC) or to both national classification and IPC | |

| |
|---|
| **B.    FIELDS SEARCHED** |
| Minimum documentation searched (classification system followed by classification symbols) |
| G06F |
| Documentation searched other than minimum documentation to the extent that such documents are included in the fields searched |
| Electronic data base consulted during the international search (name of data base and, where practicable, search terms used)<br> WPI, EPODOC, CNPAT, CNKI, IEEE: 高温, 超导, 导体, 缠绕, 三维, 立体, 二维, 截面, 电流密度, high temperature, ultra conductive, super conductive, hts, corc, simulation, model, three dimensional, two dimensional, current density |

| |
|---|
| **C.    DOCUMENTS CONSIDERED TO BE RELEVANT** |

| Category* | Citation of document, with indication, where appropriate, of the relevant passages | Relevant to claim No. |
|---|---|---|
| PX | CN 108763712 A (SHENZHEN POWER SUPPLY CO., LTD.) 06 November 2018 (2018-11-06)<br>    claims 1-6, and description, paragraphs [0005]-[0026] | 1-6 |
| A | CN 106897487 A (HUAZHONG UNIVERSITY OF SCIENCE AND TECHNOLOGY) 27 June 2017 (2017-06-27)<br>    description, paragraphs [0032]-[0042] | 1-6 |
| A | CN 106529100 A (NEW ENERGY MATERIALS AND TECHNOLOGY INSTITUTE LTD. OF DALIAN UNIVERSITY OF TECHNOLOGY (QINGDAO)) 22 March 2017 (2017-03-22)<br>    entire document | 1-6 |
| A | CN 106446483 A (NEW ENERGY MATERIALS AND TECHNOLOGY INSTITUTE LTD. OF DALIAN UNIVERSITY OF TECHNOLOGY (QINGDAO)) 22 February 2017 (2017-02-22)<br>    entire document | 1-6 |
| A | CN 103488905 A (STATE GRID CORPORATION OF CHINA ET AL.) 01 January 2014 (2014-01-01)<br>    entire document | 1-6 |

| ☑ Further documents are listed in the continuation of Box C. | ☑ See patent family annex. |
|---|---|

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **18 April 2019** | **05 May 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2019/074671**

| C. | DOCUMENTS CONSIDERED TO BE RELEVANT | |
|---|---|---|
| Category* | Citation of document, with indication, where appropriate, of the relevant passages | Relevant to claim No. |
| A | WO 2009121167 A1 (UNIVERSITY OF MANITOBA, ET AL.) 08 October 2009 (2009-10-08)<br> entire document | 1-6 |

Form PCT/ISA/210 (second sheet) (January 2015)

**INTERNATIONAL SEARCH REPORT**
Information on patent family members

| International application No. |
| --- |
| **PCT/CN2019/074671** |

| Patent document cited in search report | | | Publication date (day/month/year) | Patent family member(s) | | | Publication date (day/month/year) |
| --- | --- | --- | --- | --- | --- | --- | --- |
| CN | 108763712 | A | 06 November 2018 | None | | | |
| CN | 106897487 | A | 27 June 2017 | None | | | |
| CN | 106529100 | A | 22 March 2017 | None | | | |
| CN | 106446483 | A | 22 February 2017 | None | | | |
| CN | 103488905 | A | 01 January 2014 | None | | | |
| WO | 2009121167 | A1 | 08 October 2009 | KR | 20110067082 | A | 21 June 2011 |
| | | | | US | 2011029295 | A1 | 03 February 2011 |

Form PCT/ISA/210 (patent family annex) (January 2015)

**EP 3 798 871 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810493528